# EUROPEAN PATENT APPLICATION

(11) **EP 4 838 795 A1**
(43) Date of publication of application: **11.11.2026**
(21) Application number: 24923258.8
(22) Date of filing: 21.08.2024
(51) Int. Cl.: H04B 7/0456

(54) **CODEBOOK DESIGN METHOD, CODEBOOK CONFIGURATION METHOD, TERMINAL AND STORAGE MEDIUM**

(30) Priority: 07.02.2024 CN 202410175886
(71) Applicant: ZTE Corporation, Shenzhen, Guangdong 518057 (CN)
(72) Inventor: YANG, Jun, Shenzhen, Guangdong 518057 (CN); CHEN, Yijian, Shenzhen, Guangdong 518057 (CN); LU, Guangyan, Shenzhen, Guangdong 518057 (CN)
(74) Representative: Savi, Massimiliano
(86) International application number: PCT/CN2024/113624
(87) International publication number: WO 2025/167048

(57) **Abstract**

Embodiments of the present application provide a codebook design method and a codebook configuration method. The codebook design method comprises: presetting a codebook at least comprising a codeword group C1 and a codeword group C2, wherein the number of codewords comprised in the codeword group C1 is different from the number of codewords comprised in the codeword group C2; and configuring Bitmap information at least comprising a bit B1 and a bit B2, wherein the bit B1 and the bit B2 respectively indicate the codeword group C1 and the codeword group C2 in the codebook. The codebook configuration method comprises: sending codebook configuration signaling comprising Bitmap information.

## Description

### CROSS-REFERENCE TO RELATED APPLICATION

This application is filed on the basis of the Chinese patent application No. 202410175886.7 filed February 7, 2024, and claims priority of the Chinese patent application, the entire contents of which are incorporated herein by reference.

### TECHNICAL FIELD

The present disclosure relates to the field of communication, and in particular, to a method for designing codebooks, a method for configuring codebooks, a terminal device, a computer-readable storage medium, and a computer program product.

### BACKGROUND

Multiple Input Multiple Output (MIMO) technology is a key physical layer technology in Fourth Generation (4G) and Fifth Generation (5G) mobile communications, whereby higher spatial multiplexing and spectral efficiency can be realized. Future wireless communication systems will increasingly rely on massive MIMO technologies to realize a higher level of spatial multiplexing, in addition to that a larger bandwidth is required to further enhance system capacity.

However, a beam width emitted by a Multiple Input Multiple Output (MIMO) array is narrowed by an increase in the number of antennas. To maintain the signal coverage range, more beams may be designed in a coverage area, and accordingly, a larger codeword group is required for channel information feedback. As such, a calculation workload of a terminal during channel measurement is significantly increased, and feedback efficiency of the channel information feedback is reduced. Therefore, it is important to figure out how to reduce the calculation workload of the terminal during channel measurement and improve the feedback efficiency.

### SUMMARY

Provided are a method for designing a codebook, a method for configuring a codebook, a terminal device, a computer-readable storage medium, and a computer program product in various embodiments of the present disclosure. Thereby, flexible codebook design for different channel states is achieved, and a codebook configuration signaling is designed to indicate an available codeword group, whereby a search space of codewords is compressed and feedback efficiency is improved.

According to a first aspect of the present disclosure, a method for designing a codebook is provided. The method includes, presetting a codebook including at least two codewords, and the codewords are divided into *N* groups, where *N* is greater than or equal to 2; At least one bitmap is configured based on the codebook, where the bitmap includes at least a bit B1 and a bit B2, the bit B1 specifies a codeword group C1 in the codebook, the bit B2 specifies a codeword group C2 in the codebook, and a quantity of codewords included in the codeword group C1 is different from a quantity of codewords included in the codeword group C2.

According to a second aspect of the present disclosure, a method for configuring a codebook is provided. The method includes, transmitting a codebook configuration signaling; where the configuration signaling includes at least one bitmap; the bitmap includes at least a *B1* bit and a *B2* bit , the *BI* bit is indicative of a codeword group *C1* in the codebook, and the *B2* bit is indicative of a codeword group *C2* in the codebook; and a number of codewords comprised in the codeword group *C1* is different from a number of codewords comprised in the codeword group *C2*.

According to a third aspect of the present disclosure, a method for configuring a codebook is provided. The method includes, transmitting a codebook configuration signaling; where the configuration signaling includes at least one bitmap; the bitmap includes bit position information and bit value information; the bit position information is indicative of codeword groups in the codebook; the bit value information is indicative of a state of the codeword groups; and the codebook includes at least two codeword groups including different numbers of codewords.

According to a fourth aspect of the present disclosure, a terminal device is provided. The terminal device includes at least one processor, and a storage device storing at least one program thereon, which when executed by the processor, causes the processor to carry out any one of the methods as described above.

According to fifth aspect of the present disclosure, a computer-readable storage medium is provided. The computer-readable storage medium stores a computer program which, when executed by a processor, causes the processor to carry out any one of the methods as described above.

According to a sixth aspect of the present application, a computer program product is provided. The product includes a computer program or a computer instruction stored in a computer-readable storage medium which, when executed by a processor of a computer device, causes the computer device to carry out any one of the methods as described above.

According to the method for designing a codebook and the method for configuring a codebook provided in embodiments of the present disclosure, the codebook is divided into codeword groups of different sizes, whereby flexible codebook design based on channel states is realized, and channel feedback efficiency is enhanced. Furthermore, a bitmap is configured based on the designed codebook to specify states of respective codeword groups in the codebook, whereby an available codeword group is determined by a terminal device based on the bitmap, the search space of codewords is compressed, and the channel feedback efficiency is improved.

### BRIEF DESCRIPTION OF DRAWINGS

FIG. 1 is a block diagram illustrating a typical MIMO system in related art;
FIG. 2 is a flowchart illustrating a method for designing codebooks according to in an embodiment of the present disclosure;
FIG. 3 is a block diagram illustrating a codebook division based on beam angles according to an embodiment of the present disclosure;
FIG. 4 is a block diagram illustrating a codebook division based on beam angles according to another embodiment of the present disclosure;
FIG. 5 is a block diagram illustrating the indication of a codeword group by a bitmap according to an embodiment of the present disclosure;
FIG. 6 is a block diagram illustrating codebook division with overlapping region according to an embodiment of the present disclosure;
FIG. 7 is a block diagram illustrating the indication of a codeword group by a bitmap according to another embodiment of the present disclosure;
FIG. 8 is a block diagram illustrating codebook division with overlapping region according to another embodiment of the present disclosure;
FIG. 9 is a block diagram illustrating the indication of a codeword group by a bitmap according to another embodiment of the present disclosure; and
FIG. 10 depicts a schematic diagram showing a terminal device according to an embodiment of the present disclosure.

### DETAILED DESCRIPTION

The purpose, technical scheme and advantages of the present disclosure will become apparent through the following description for various embodiments in conjunction with the drawings. It should be appreciated that the embodiments described here are intended for illustration but not limitation of the present disclosure.

It should be noted that although the devices are shown with individual functional modules in the schematic diagram and the logical sequences are shown in the flow chart, in some cases, the devices can have different modules than those shown and the operations can be executed in a different order than those shown. It should be noted that the terms "first" and "second", if used in the description, the claims and the drawings are intended to distinguish similar objects, and do not necessarily imply any specific order or sequence.

In the embodiments of this application, the terms "exemplary" are used as examples, illustrations or explanations, and should not be interpreted as being more preferred or advantageous than other embodiments or designs. Specifically, the use of words such as "exemplarily" is intended to present related concepts in a specific manner.

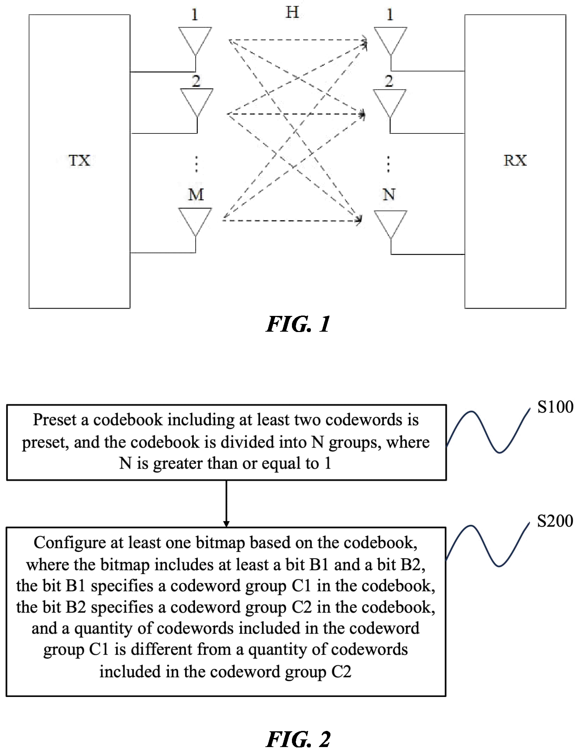

In MIMO technologies, multiple-antenna arrays are deployed to perform signal transmission and reception, whereby beamforming of transmitted signals is realized by configuring appropriate precoding. FIG. 1 is a block diagram illustrating a typical MIMO system in related art. M transmitting antenna units and N receiving antenna units are respectively included in a transmitting end TX and a receiving end RX, whereby a transceiving channel *H* is constituted. Compared with legacy antenna systems, higher spatial multiplexing and spectral efficiency can be realized by the MIMO technologies, whereby cell capacity is further enhanced.

Channel information between a transmitting device and a receiving device is required to be relied upon by Multiple Input Multiple Output (MIMO) technologies for beamforming, and therefore the channel information between the transmitting device and the receiving device is to be acquired prior to communication. To facilitate a user equipment (UE) to feed back the channel information to a base station (BS), a fixed codebook design is adopted in related art. The channel information is measured and determined by the UE based on a received reference signal, and an appropriate codeword is subsequently found from the codebook to perform quantization and feedback on the channel information.

Future wireless communication systems will increasingly rely on massive MIMO to realize a higher level of spatial multiplexing, in addition to that a larger bandwidth is required to further enhance system capacity. However, a beam width emitted by a MIMO array is narrowed by an increase in the number of antennas in massive MIMO. To ensure that a signal coverage range remains unchanged, more beams may be designed in a coverage area, and accordingly, a larger codeword group is required for channel information feedback. As such, a calculation workload for a UE during channel measurement is significantly increased, and feedback efficiency of the channel information feedback is reduced.

In the related art, selectable codewords and non-selectable codewords are divided by a base station employing a fixed grid, and a selectable codeword group is configured for a UE. A codeword is selected by the UE from the configured selectable codeword group, whereby a search space is compressed. However, it is not possible to achieve a more reasonable design for different channel states through the method of dividing based on the fixed grid, whereby further enhancement of the feedback efficiency is limited. In view of this, a method for designing a codebook and a method for configuring a codebook are provided in embodiments of the present disclosure. A codebook is divided into codeword groups of different sizes, and the availability of each codeword group is specified through a bitmap. Thereby, a more flexible design may be realized for different states of the channel, search space is further compressed, feedback efficiency is improved, and additionally, overhead of codebook configuration signaling may be reduced by dividing overlapping codeword groups.

The method for designing codebooks and the method for configuring codebooks according to the embodiments of the present disclosure can be applied to various communication systems, including, without limitation, Global System of Mobile communication (GSM) systems, Code Division Multiple Access (CDMA) systems, Wide band Code Division Multiple Access (WCDMA) systems, General Packet Radio Service (GPRS) systems, LTE systems, Advanced long term evolution (LTE-A) systems, 5G systems, Beyond Fifth Generation (B5G) systems, 6th Generation (6G) systems, or the like.

In the embodiments of the present disclosure, a terminal device may be a mobile phone (mobile phone), a tablet computer (pad), a computer with wireless transmitting and receiving functions, a virtual reality (virtual reality, VR) terminal, an augmented reality (AR) terminal, an internet of things (IoT) terminal device, a wireless terminal in industrial control , a wireless terminal in self-driving (self-driving), a wireless terminal in remote medical, a wireless terminal in smart grid, a wireless terminal in transportation safety, a wireless terminal in smart city, a wireless terminal in smart home, user equipment (UE), an in-vehicle communication apparatus, an in-vehicle communication chip, a roadside unit, a communication apparatus in the roadside unit, or a combination thereof. A terminal device may also be a wearable device/wearable smart device, including, without limitation, a portable device integrated into clothes or accessories of a user, such as a bracelet, glasses, gloves, a watch, apparel, or the like.

In the embodiments of the present disclosure, a BS may be a base transceiver station (BTS) in a global system for mobile communications or code division multiple access, a NodeB (NB) in a wideband code division multiple access system, an evolved NodeB (eNB or eNodeB) in an LTE system, or a wireless controller in a cloud radio access network (CRAN) scenario. Alternatively, a network device may be a relay station, an access point, an in-vehicle device, a wearable device, a network device in a future 5G network, a network device in a future evolved Public Land Mobile Network (PLMN), including, without limitation, a transmission and reception point (TRP) or a transmission point (TP) in an NR system, a base station (gNB) in the NR system, one or a group of antenna panels (including a plurality of antenna panels) of a base station in a 5G system, or the like, and the present disclosure is not limited thereto.

The method for designing a codebook and the method for configuring a codebook in embodiments of the present disclosure are described below with greater details. FIG. 2 is a flowchart illustrating a method for designing codebooks according to in an embodiment of the present disclosure. The method may be applied to a base station or a terminal device, and includes operation S100 and operation S200.

At operation S100, a codebook including at least two codewords is preset, and the codebook is divided into N groups, where N is greater than or equal to 2.

It should be noted that the BS and the terminal device share the same codebook agreed upon in advance. The codewords in the codebook are grouped.

In an embodiment, the codewords in the codebook are grouped into two codeword groups, e.g., a codeword group *C1* and a codeword group *C2*, where codeword group *C1* contains different number of codewords from codeword group *C2*.

In an embodiment, at least one identical codeword is shared by codeword group *C1* and codeword group *C2*.

In an embodiment, the codewords in the codebook are grouped into more than two codeword groups. It should be appreciated that when a quantity of obtained codeword groups is greater than two, at least two codeword groups containing different quantities of codewords are present among all the codeword groups, and codeword groups containing the same quantity of codewords may be present.

As an example, codewords in the codebook are grouped into codeword groups C1, C2, C3, and C4. The quantity of codewords included in each of the codeword groups C1, C2, and C3 is K1, and the quantity of codewords included in the codeword group C4 is K2, where K1 is not equal to K2. In this example, codeword groups containing different quantities of codewords are obtained, and codeword groups containing a same quantity of codewords are also obtained. As another example, the codebook is grouped into codeword groups C1, C2, C3, and C4, where the quantity of codewords included in the codeword group C1 is K1, the quantity of codewords included in the codeword group C2 is K2, the quantity of codewords included in the codeword group C3 is K3, and the quantity of codewords included in the codeword group C4 is K4, where K1, K2, K3, and K4 are unequal to each other, i.e., the quantities of codewords included in the codeword groups may be different from each other.

In an embodiment, the codewords in the codebook are grouped into codeword groups C1, C2, C3, and C4. Codeword groups C1 and C2 include Q1 identical codewords, and codeword groups C3 and C4 include Q2 identical codewords, where Q1 is not equal to Q2. In other words, shared codewords can be included between multiple sets of codeword groups, and the number of the shared codewords may be different. It should be appreciated that, in other embodiments, Q1 and Q2 may be identical.

In an embodiment, the division of the codeword groups may be performed based on beam angles; in other embodiments, the division of the codeword groups may also be performed based on historically counted terminal user distribution data (i.e., a distribution density of terminal users in different regions), distribution information of known buildings in an environment, user movement trajectory information, user historical feedback information, artificial intelligence model prediction information, or the like. The grouped codeword groups are arranged in a matrix row-and-column form. It should be noted that a correlation exists among codewords in different regions in the codebook, and the codewords in the different regions can be divided into codeword groups of different sizes according to strength of the correlation, the basis for dividing the codeword groups is not limited in the present application.

At operation S200, at least one bitmap is configured based on the codebook, where the bitmap includes at least a bit B1 and a bit B2, the bit B1 specifies a codeword group C1 in the codebook, the bit B2 specifies a codeword group C2 in the codebook, and a quantity of codewords included in the codeword group C1 is different from a quantity of codewords included in the codeword group C2.

In an embodiment, the bitmap is in a form of a bitmap sequence, and a quantity of bits included in the bitmap sequence is identical to a quantity of codeword groups divided in the codebook. The bit B1 and the bit B2 may specify that the codeword groups are in an available state or an unavailable state with different values. The available state of a codeword group specifies that codewords in the codeword group can be selected by a terminal device or a base station for feedback when channel quantization and feedback are performed, and the unavailable state of the codeword group specifies that the codewords in the codeword group are not selectable when channel quantization and feedback are performed by the terminal device or the base station. Therefore, a codebook subset restriction is constituted by the bitmap as configuration information, and the bitmap may be utilized to indicate a base station or a terminal device of which codewords in the codebook cannot be selected for feedback.

It should be appreciated that, since the quantity of codewords included in the codeword group C1 is different from the quantity of codewords included in the codeword group C2, quantities of codewords specified by the bit B1 and the bit B2 are different. In an example where quantities of codewords respectively included in the codeword group C1 and the codeword group C2 are *M* and *N*, states of the M codewords in the codeword group C1 are specified by the bit B1, and states of the N codewords in the codeword group C2 are specified by the bit B2.

As an example, when a value of the bit B1 is '0', the codeword group C1 is specified as not selectable; when the value of the bit B1 is '1', the codeword group C1 is specified as selectable; when a value of the bit B2 is '0', the codeword group C2 is specified as not selectable; and when the value of the bit B2 is '1', the codeword group C2 is specified as selectable.

In this embodiment, the codewords are grouped, and whether the codewords in one codeword group are selectable can be concurrently indicated by each bit, whereby signaling overhead is effectively reduced. For example, 256 codewords are included in one codebook; if one codeword is specified by one bit of the bitmap, a length of the bitmap is 256 bits; if the codewords in the codebook are divided into 16 groups, and one codeword group is specified by each bit position in the bitmap, the length of the bitmap is 16 bits. Meanwhile, dividing codeword groups into different sizes based on actual requirements not only improves flexibility of indication by the bitmap, but also enables indication of a larger codeword group through a single bit value, whereby the signaling overhead is further reduced.

In an embodiment, the codewords in the codebook may be arranged in a one-dimensional, two-dimensional, three-dimensional, or higher-dimensional matrix, and a set of codewords within a specific region in the one-dimensional, two-dimensional, three-dimensional, or higher-dimensional matrix may be specified by one bit at a specific position in the bitmap. The specific codeword group specified by each bit in the bitmap is set in advance. For example, it is set in advance that a first bit B1 in the bitmap sequence specifies the codeword group C1, the position of the codeword group C1 in the codebook, and the quantity of codewords included in the codeword group C1; it is also set in advance that a second bit B2 in the bitmap sequence specifies the codeword group C2, the position of the codeword group C2 in the codebook, and the quantity of codewords included in the codeword group C2.

In an embodiment, the bit B1 specifies the codeword group C1 in the codebook, and the bit B2 specifies the codeword group C2 in the codebook. The codeword group C1 and the codeword group C2 share at least one identical codeword, and the state of each identical codeword is jointly determined by values of the bit B1 and the bit B2.

As an example, when both the bit B1 and the bit B2 specify selectable, a state of identical codewords included in the codeword group C1 and the codeword group C2 is selectable. When any one of the bit B1 and the bit B2 specifies not selectable, a state of identical codewords included in the codeword group C1 and the codeword group C2 is not selectable. A design scheme employing shared codewords allows overlaps between codeword groups specified by different bits, whereby states of different codewords in a same codeword group may be specified without reducing a size of the codeword group, configuration flexibility is increased, and the signaling overhead is further reduced.

According to an embodiment, a method for configuring codebooks is provided. The method is applied to a base station or a terminal device. An example where the codebook is configured by a base station and sent to a terminal device is used for description below. It should be appreciated that, in another embodiment, a selectable codeword range of the codebook may also be configured by the terminal device and sent to the base station.

In an embodiment, a codebook configuration signaling is sent by the base station, and the bitmap configured and generated by employing the method for designing codebooks according to the embodiments discussed above is included in the codebook configuration signaling. A selectable codeword range may be determined by the terminal device based on the bitmap in the codebook configuration signaling, whereby a search space of codewords is compressed when channel quantization and feedback are performed, and feedback efficiency of the terminal device is improved.

In an embodiment, the bitmap includes bit position information and bit value information. For each bit in the bitmap, an order of the bit in a bitmap sequence is bit position information of the bit, and a value of each bit is bit value information of the bit. A mapping relationship between the bit position information and codeword groups is set in advance, whereby states of corresponding codeword groups may be specified through the bit value information.

As an example, bits in a bitmap sequence are preset to sequentially specify codeword groups C1, C2, and C3; for a bitmap sequence [100], bit position information of a first bit is '1' (the first one), specifying the codeword group C1, and bit value information of the first bit is '1', specifying that the codeword group C1 is selectable; bit position information of a second bit is '2' (the second one), specifying the codeword group C2, and bit value information of the second bit is '0', specifying that the codeword group C2 is not selectable; bit position information of a third bit is '3' (the third one), specifying the codeword group C3, and bit value information of the third bit is '0', specifying that the codeword group C3 is not selectable.

Several example embodiments of the method for designing codebooks and the method for configuring codebooks are provided below.

### Example Embodiment 1

According to this embodiment, another method for designing codebooks applied to the base station and the terminal device is provided. The method includes operations S101 to S102. Codeword overlapping is absent in the codeword groups divided from the codebook in the this example embodiment, meaning that a shared codeword is absent. The shared codeword refers to an identical codeword included in different codeword groups.

At operation S101, a codebook configuration signaling is sent to a terminal device by a base station.

Codebook configuration is performed by the base station, and a codebook configuration signaling is generated and sent to the terminal device. The codebook configuration signaling is indicative of a selectable codeword range when channel feedback is being performed by the terminal device. As such, the search space of codewords is further compressed, and the feedback efficiency is improved. In the present example embodiment, the codebook configuration signaling includes a bitmap. The bitmap is in a sequence form, and one codeword group is specified by each bit in the bitmap sequence. It should be appreciated that codewords in a codebook may be arranged in a form of a two-dimensional matrix, a three-dimensional matrix, or even a higher-dimensional matrix, and a codeword within a specific region of the two-dimensional matrix, the three-dimensional matrix, or the higher-dimensional matrix may be specified by one bit at a specific position in the bitmap sequence.

In an implementation, the generation and transmission of the codebook configuration signaling by the base station includes operations S1011 to S1014.

At operation S1011, a preset codebook is selected by the base station.

It should be appreciated that at least one identical preset codebook designed in advance (i.e., a preset codebook) is shared by both the base station and the terminal device. The quantity of codewords in the preset codebook is determined based on preset parameters *N₁, N₂, O₁,* and *O₂*, and all codewords may be arranged in a matrix form by rows and columns.

Each codeword in the preset codebook may represent a complex matrix intended to configure an amplitude and a phase of a transmitted signal of each antenna on a MIMO array. Through control of the amplitude and the phase, signals transmitted by the MIMO array may achieve in-phase superposition in a designated direction, whereby a directional beam having a high gain is formed, and an effect of beamforming is achieved. Each codeword in the preset codebook is respectively configured to generate beams in different directions within a continuous region, whereby signal coverage of the continuous region may be realized by beams generated by all codewords in the codebook. Specifically, a codeword in the preset codebook may be in the following format: ${W}_{l , m , n} = \frac{1}{\sqrt{{P}_{CSI - RS}}} \left[\begin{matrix}{ν}_{l , m} \\ {φ}_{n} {ν}_{l , m}\end{matrix}\right]$ where, ${φ}_{n} = {e}^{jπn / 2}$ ${u}_{m} = \left\{\begin{matrix}\left[1 {e}^{j \frac{2 πm}{{O}_{2} {N}_{2}}} ⋯ {e}^{j \frac{2 πm \left({N}_{2}-1\right)}{{O}_{2} {N}_{2}}}\right] \\ 1\end{matrix}\right\} \begin{matrix}{N}_{2} > 1 \\ {N}_{2} = 1\end{matrix}$ ${ν}_{l , m} = \left[{u}_{m} {e}^{j \frac{2 πl}{{O}_{1} {N}_{1}}}{u}_{m} ⋯ {e}^{j \frac{2 πl \left({N}_{1}-1\right)}{{O}_{1} {N}_{1}}}{u}_{m}\right] .$

In the expression discussed above, {l, m, n} is codeword indices indicative of a position where a codeword is located in the codebook. In some cases, the index *l* and the index *m* may be indicative of a beam direction corresponding to the codeword. Specifically, the index *l* may be indicative of a first direction, such as a horizontal direction, and the index *m* may be indicative of a second direction, such as a vertical direction. In some cases, the index *n* may specify a polarization phase of the beam corresponding to the codeword. For example, the index n may take a value of 0, 1, 2, or 3, and polarization phase information of the beam may be calculated based on the equation discussed above.

For a multi-panel, multi-layer transmission case, the codeword in the preset codebook may be in the following format: ${W}_{{l}_{11} {l}_{12} , ⋯ {l}_{TK} , {m}_{11} {m}_{12} , ⋯ {m}_{TK} , {n}_{21} {n}_{22} , ⋯ {n}_{TK}} = \frac{1}{\sqrt{{KP}_{CSI - RS}}} \left[\begin{matrix}{ν}_{{l}_{11} , {m}_{11}} & {ν}_{{l}_{12} , {m}_{12}} & ⋯ & {ν}_{{l}_{1 k} , {m}_{1 k}} \\ {φ}_{{n}_{21}} {ν}_{{l}_{21} , {m}_{21}} & {φ}_{{n}_{22}} {ν}_{{l}_{22} , {m}_{22}} & ⋯ & {φ}_{{n}_{2 k}} {ν}_{{l}_{2 k} , {m}_{2 k}} \\ ⋮ & ⋮ & ⋱ & ⋮ \\ {φ}_{{n}_{T 1}} {ν}_{{l}_{T 1} , {m}_{T 1}} & {φ}_{{n}_{T 2}} {ν}_{{l}_{T 2} , {m}_{T 2}} & ⋯ & {φ}_{{n}_{Tk}} {ν}_{{l}_{Tk} , {m}_{Tk}}\end{matrix}\right]$ where, ${φ}_{n} = {e}^{jπn / 2}$ ${ν}_{l , m} = \left[{u}_{m} {e}^{j \frac{2 πl}{{O}_{1} {N}_{1}}}{u}_{m} ⋯ {e}^{j \frac{2 πl \left({N}_{1}-1\right)}{{O}_{1} {N}_{1}}}{u}_{m}\right] .$

*T* is a quantity of sub-arrays (panels) divided from the MIMO array, *K* is a quantity of transmission layers, *P_{CSI-RS}* is a quantity of ports, and a column in the codeword discussed above represents a codeword vector configured for one-layer transmission. {l, m, n} is codeword indices indicative of a position where a codeword is located in the codebook. In addition, codeword positions may be indicated by codeword indications. Each of the codeword indications corresponds to a respective one of the indices of the codewords. In some cases, {i₁₁, i₁₂} in the codeword indication is determined by the index *l* and the index *m* of the codeword, and i2 is determined by a size of the codeword group indicated by {i₁₁, i₁₂} and a quantity of polarization states.

At operation S1012, the preset codebook is divided into codeword groups of different sizes by the base station.

Since a correlation exists among codewords in different regions in the codebook, the codewords in the different regions may be divided into codeword groups of different sizes based on strength of the correlation, where codeword groups of different sizes specify that a quantity of codewords included in each codeword group is different.

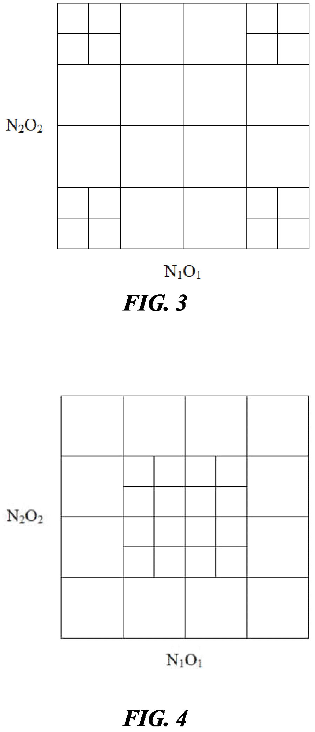

FIG. 3 is a block diagram illustrating a codebook division based on beam angles according to an embodiment of the present disclosure. A horizontal angle and a pitch angle of a beam corresponding to the codeword are indicated by the codeword index. Codewords in four corners, including an upper corner, a lower corner, a left corner, and a right corner, in the figure represent a spatial beam of a small angle, where the small angle refers to an included angle between a beam direction and a normal direction of the MIMO array, i.e., the spatial beam of a small angle is closer to the normal direction of the MIMO array. According to different beam angles corresponding to the codewords, the codewords in the codebook are divided into codeword groups of different sizes.

In this example, the preset codebook is divided into 28 codeword groups in total. Each of the codeword groups distributed in the four corners includes a smaller number of codewords, and each of the codeword groups distributed in a middle includes a larger number of codewords. As shown in FIG. 3, each block in the figure represents one codeword group, and therefore a total of 28 block regions are present. The size of a block represents a number of codewords included in the codeword group. A codeword group represented by a smaller block includes 4 codewords, and a codeword group corresponding to a larger block includes 6 codewords. The horizontal axis and the vertical axis in the figure represent indices of codewords.

It should be appreciated that division of codeword groups may be adjusted based on actual situations. FIG. 4 is a block diagram illustrating a codebook division based on beam angles according to another embodiment of the present disclosure. As shown in FIG. 4, codewords corresponding to the spatial beam of the small angle is divided into larger blocks.

Besides dividing codeword groups based on beam angles, codeword groups may also be divided into different sizes based on historically accumulated terminal user distribution data, i.e., a distribution density of terminal users in different regions. Alternatively, the codeword groups may be divided into different sizes by analyzing occlusion and multipath information based on distribution data of known buildings in an environment. Although some examples of the present disclosure are illustrated with division of the codebook into codeword groups of different sizes according to the beam angles, other divisions can be conceived.

At operation S1013, a selectable codeword group and a non-selectable codeword group are determined by the base station, and a bitmap is configured for indication.

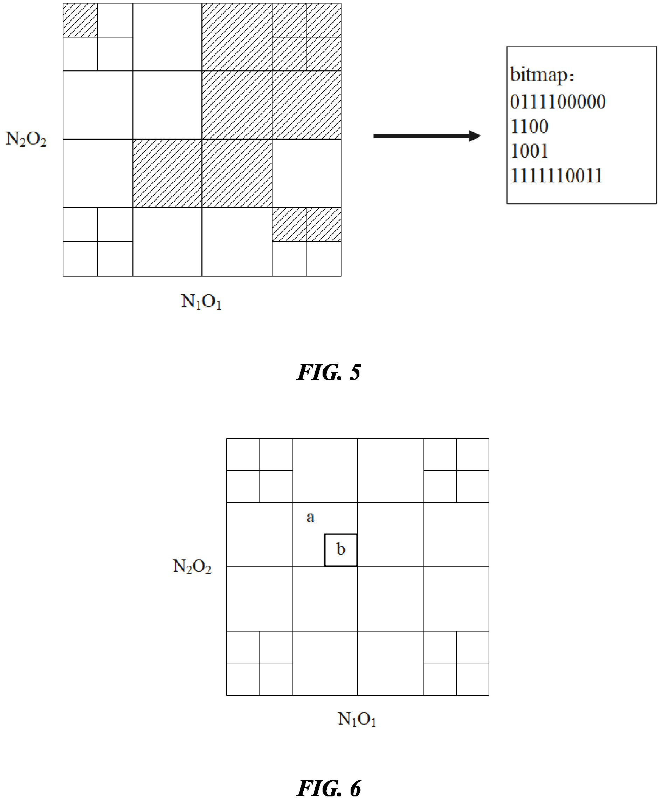

FIG. 5 is a block diagram illustrating the indication of a codeword group by a bitmap according to an embodiment of the present disclosure. As shown in FIG. 5, a codebook is shown on the left side with the blocks representing codeword groups of different sizes. The shaded blocks represent codeword groups unavailable for feedback (i.e., the codeword groups are not selectable), and remaining block regions represent codeword groups available for feedback (i.e., the codeword groups are selectable). On the right side is a bitmap configured by the base station according to the availabilities of the codeword groups, with each bit in the bitmap indicative a respective one of the codeword groups. For example, a bit with the value of '0' specifies that the codeword group as indicated is not selectable; a bit with the value of '1' specifies that the codeword group as indicated is selectable.

It should be noted that a base station may comprehensively consider a communication state of each terminal device to determine selectable and non-selectable codeword groups, and configures and delivers a bitmap subsequently to the respective terminal device. The terminal device selects a codeword from the selectable codeword groups specified by the bitmap. The position of each codeword group and the quantity of codewords contained are in a one-to-one correspondence with order of a bit sequence in the bitmap and are set in advance. Taking FIG. 5 as an example, a bitmap sequence [0111100000110010011111110011] includes 28 bits in total, respectively specifying 28 codeword groups with 16 available codeword groups and 12 non-selectable codeword groups. Due to different sizes of the codeword groups, quantities of selectable codewords specified by different bits in the bitmap are different; for example, a fourth bit in the bitmap sequence specifies that four codewords are selectable, while a fifth bit specifies that 16 codewords are selectable.

For a small quantity of antennas, the codeword group may include only one codeword, and a value of each bit in the bitmap sequence may directly specify whether a codeword at a fixed position is selectable. For a large quantity of antennas, a quantity of codewords increases significantly accordingly. If one codeword is still specified by one bit value, a length of the bitmap sequence will be greatly increased, whereby signaling overhead is increased. In this embodiment, codewords are grouped, and whether a group of codewords is selectable can be indicated by each bit, whereby the signaling overhead is effectively reduced. Codeword groups of different sizes may also be divided according to actual requirements. Not only the flexibility of bitmap indication is improved, but also indication of a larger codeword group through a single bit value is allowed, whereby the signaling overhead is further reduced.

At operation S1014, the bitmap is sent by the base station.

The configured bitmap is sent to the terminal device by the base station. It should be appreciated that the method for configuring codebooks set forth in this example is performed prior to channel measurement and channel feedback performed by a terminal device. That is, the bitmap is first received by the terminal device, and a selectable codeword range is determined, whereby an optimal codeword is selected from the determined available codeword range and fed back in a subsequent channel measurement and channel feedback procedure.

At operation S102, an optimal codeword is searched for by the terminal device based on the codebook configuration signaling.

Upon receiving the bitmap, and based on a mapping relationship between the bits in the bitmap and the codeword groups, the terminal device removes each codeword group corresponding to a bit with value of '0' in the bitmap sequence from the preset codebook, and searches for the optimal codeword from the codeword group corresponding to a bit with value of '1', for channel quantization and feedback.

It should be appreciated that, since the codewords in a codebook may be indicated by the indices of the codewords in a matrix, each bit in the bitmap may correspond to a respective one of the indices of each codeword group, i.e., a mapping is formed. Furthermore, other mappings may also be preset according to actual situations.

### Example Embodiment 2

According to this embodiment, another method for configuring codebooks applied to the base station and the terminal device is provided. The method includes operations S201 to S202. In this embodiment, a codeword overlapping region is present in the codeword groups divided from the codebook, which means that shared codeword(s) is/are present.

At operation S201, a codebook configuration signaling is sent to a terminal device by a base station.

Codebook configuration is performed by the base station, and a codebook configuration signaling is generated and sent to the terminal device. The codebook configuration signaling is indicative of a selectable codeword range when channel feedback is being performed by the terminal device. As such, the search space of codewords is further compressed, and the feedback efficiency is improved. In the present example embodiment, the codebook configuration signaling includes a bitmap. The bitmap is in a sequence form, and one codeword group is specified by each bit in the bitmap sequence. It should be appreciated that codewords in a codebook may be arranged in a form of a two-dimensional matrix, a three-dimensional matrix, or even a higher-dimensional matrix, and a codeword within a specific region of the two-dimensional matrix, the three-dimensional matrix, or the higher-dimensional matrix may be specified by one bit at a specific position in the bitmap sequence.

In an implementation, the generation and transmission of the codebook configuration signaling by the base station includes operations S2011 to S2014.

At operation S2011, a preset codebook is selected by the base station.

It should be appreciated that at least one identical preset codebook designed in advance (i.e., a preset codebook) is shared by both the base station and the terminal device. The quantity of codewords in the preset codebook is determined based on preset parameters *N₁, N₂, O₁,* and *O₂*, and all codewords may be arranged in a matrix form by rows and columns.

Each codeword in the preset codebook may represent a complex matrix intended to configure an amplitude and a phase of a transmitted signal of each antenna on a MIMO array. Through control of the amplitude and the phase, signals transmitted by the MIMO array may achieve in-phase superposition in a designated direction, whereby a directional beam having a high gain is formed, and an effect of beamforming is achieved. Each codeword in the preset codebook is respectively configured to generate beams in different directions within a continuous region, whereby signal coverage of the continuous region may be realized by beams generated by all codewords in the codebook. Specifically, a codeword in the preset codebook may be in the following format: ${W}_{l , m , n} = \frac{1}{\sqrt{{P}_{CSI - RS}}} \left[\begin{matrix}{ν}_{l , m} \\ {φ}_{n} {ν}_{l , m}\end{matrix}\right]$ where, ${φ}_{n} = {e}^{jπn / 2}$ ${u}_{m} = \left\{\begin{matrix}\left[1 {e}^{j \frac{2 πm}{{O}_{2} {N}_{2}}} ⋯ {e}^{j \frac{2 πm \left({N}_{2}-1\right)}{{O}_{2} {N}_{2}}}\right] \\ 1\end{matrix}\right\} \begin{matrix}{N}_{2} > 1 \\ {N}_{2} = 1\end{matrix}$ ${ν}_{l , m} = \left[{u}_{m} {e}^{j \frac{2 πl}{{O}_{1} {N}_{1}}}{u}_{m} ⋯ {e}^{j \frac{2 πl \left({N}_{1}-1\right)}{{O}_{1} {N}_{1}}}{u}_{m}\right] .$

In the expression discussed above, {l, m, n} is codeword indices indicative of a position where a codeword is located in the codebook. In some cases, the index *l* and the index *m* may be indicative of a beam direction corresponding to the codeword. Specifically, the index *l* may be indicative of a first direction, such as a horizontal direction, and the index *m* may be indicative of a second direction, such as a vertical direction. In some cases, the index *n* may specify a polarization phase of the beam corresponding to the codeword. For example, the index n may take a value of 0, 1, 2, or 3, and polarization phase information of the beam may be calculated based on the equation discussed above.

For a multi-panel, multi-layer transmission case, the codeword in the preset codebook may be in the following format: ${W}_{{l}_{11} {l}_{12} , ⋯ {l}_{TK} , {m}_{11} {m}_{12} , ⋯ {m}_{TK} , {n}_{21} {n}_{22} , ⋯ {n}_{TK}} = \frac{1}{\sqrt{{KP}_{CSI - RS}}} \left[\begin{matrix}{ν}_{{l}_{11} , {m}_{11}} & {ν}_{{l}_{12} , {m}_{12}} & ⋯ & {ν}_{{l}_{1 k} , {m}_{1 k}} \\ {φ}_{{n}_{21}} {ν}_{{l}_{21} , {m}_{21}} & {φ}_{{n}_{22}} {ν}_{{l}_{22} , {m}_{22}} & ⋯ & {φ}_{{n}_{2 k}} {ν}_{{l}_{2 k} , {m}_{2 k}} \\ ⋮ & ⋮ & ⋱ & ⋮ \\ {φ}_{{n}_{T 1}} {ν}_{{l}_{T 1} , {m}_{T 1}} & {φ}_{{n}_{T 2}} {ν}_{{l}_{T 2} , {m}_{T 2}} & ⋯ & {φ}_{{n}_{Tk}} {ν}_{{l}_{Tk} , {m}_{Tk}}\end{matrix}\right]$ where, ${φ}_{n} = {e}^{jπn / 2}$ ${ν}_{l , m} = \left[{u}_{m} {e}^{j \frac{2 πl}{{O}_{1} {N}_{1}}}{u}_{m} ⋯ {e}^{j \frac{2 πl \left({N}_{1}-1\right)}{{O}_{1} {N}_{1}}}{u}_{m}\right] .$

*T* is a quantity of sub-arrays (panels) divided from the MIMO array, *K* is a quantity of transmission layers, *P_{CSI-RS}* is a quantity of ports, and a column in the codeword discussed above represents a codeword vector configured for one-layer transmission. {l, m, n} is codeword indices indicative of a position where a codeword is located in the codebook. In addition, codeword positions may be indicated by codeword indications. Each of the codeword indications corresponds to a respective one of the indices of the codewords. In some cases, {i₁₁, i₁₂} in the codeword indication is determined by the index *l* and the index *m* of the codeword, and i2 is determined by a size of the codeword group indicated by {i₁₁, i₁₂} and a quantity of polarization states.

At operation S2012, the preset codebook is divided into codeword groups of different sizes by the base station, where an overlapping region is present among the codeword groups.

An overlapping region present among the codeword groups indicates that a shared codeword is present among overlapping codeword groups. FIG. 6 is a block diagram illustrating codebook division with overlapping region according to an embodiment of the present disclosure.

In this example, the preset codebook is divided into 29 codeword groups. As shown in FIG. 6, each block in the figure represents one codeword group, and the size of a block indicates a quantity of codewords included in the codeword group. A codeword group represented by a smaller block includes four codewords, and a codeword group represented by a larger block includes 16 codewords. The horizontal axis and the vertical axis in the figure represent indices of codewords. In the present example, a codeword group *a* includes 16 codewords, a codeword group *b* includes 4 codewords, and 4 codewords are shared between the codeword group *a* and the codeword group *b.*

At operation S2013, a selectable codeword group and an unavailable codeword group are determined by the base station, and a bitmap is configured for indication.

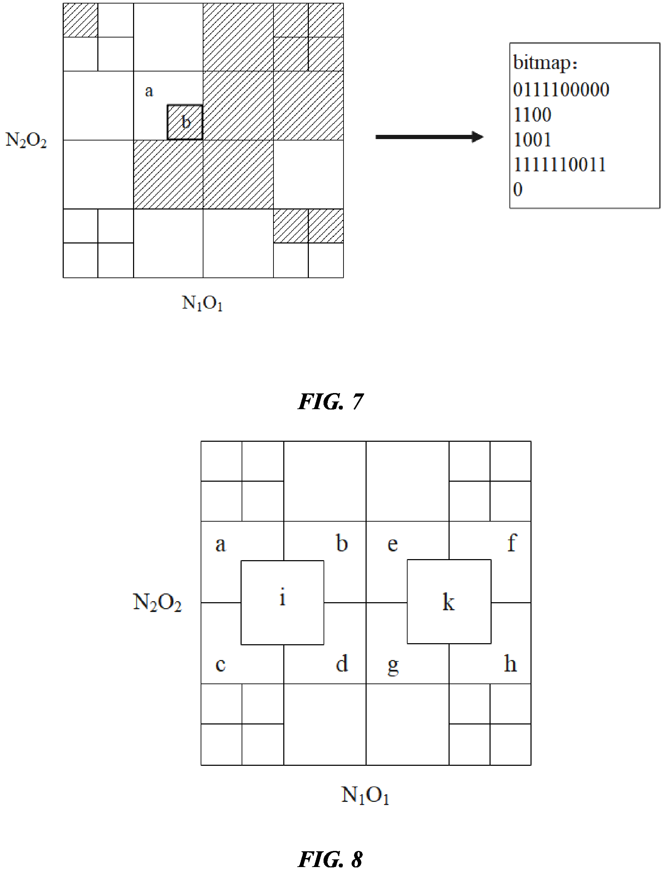

FIG. 7 is a block diagram illustrating the indication of a codeword group by a bitmap according to another embodiment of the present disclosure. As shown in FIG. 7, a codebook is shown on the left side with the blocks representing codeword groups of different sizes. The shaded blocks represent codeword groups unavailable for feedback (i.e., the codeword groups are not selectable), and remaining block regions represent codeword groups available for feedback (i.e., the codeword groups are selectable). On the right side is a bitmap configured by the base station according to the availabilities of the codeword groups, with each bit in the bitmap indicative a respective one of the codeword groups. For example, a bit with the value of '0' specifies that the codeword group as indicated is not selectable; a bit with the value of '1' specifies that the codeword group as indicated is selectable.

It should be noted that a base station may comprehensively consider a communication state of each terminal device to determine selectable and non-selectable codeword groups, and configures and delivers a bitmap subsequently to the respective terminal device. The terminal device selects a codeword from the selectable codeword groups specified by the bitmap. The position of each codeword group and the number of comprised codewords are in a one-to-one correspondence with the order of bits in the bitmap sequence and are set in advance. As shown in FIG. 7 by way of example, a bitmap sequence [01111000001100100111111100110] includes 29 bits, each indicating 29 codeword groups with 16 available codeword groups and 13 unavailable codeword groups. The last bit position of the bitmap sequence indicates the codeword group *b*. It should be appreciated that a correspondence relationship between bit positions and codeword groups is preset.

In this example, the overlapping codeword group *a* and the overlapping codeword group *b* each includes a bit indicating the availability of the respective codeword group. The bit of the codeword group *a* with the value of '1', indicates that 16 codewords included in the codeword group a are selectable. Likewise, the bit of the codeword group *b* with the value of '0', indicates that 16 codewords included in the codeword group a are not selectable. The overlapping region between the codeword group *a* and the codeword group *b,* i.e., the 4 shared codewords, is jointly determined by the codeword group *a* and the codeword group *b.* Therefore, in this example, the 4 codewords shared by the codeword group *a* and the codeword group *b* are not selectable, and remaining 12 codewords of the codeword group *a* are selectable.

If the indication of overlapping codeword groups is not adopted, in order to indicate that 12 codewords in a corresponding region of the codeword group *a* are selectable and 4 codewords are not selectable, the size of the codeword group *a* needs to be reduced, from one codeword group *a* including 16 codewords to 4 codeword groups respectively including 4 codewords, and accordingly a bitmap of 31 bits should be set. Conversely, employing an overlapping codeword design, only one codeword group *b* is added, accordingly a bitmap of 29 bits should be set. Complete or partial overlap may occur among codeword groups indicated by different bits in the bitmap, whereby the size of signaling overhead can be reduced, and configuration flexibility can be ensured.

At operation S2014, the bitmap is sent by the base station.

The configured bitmap is sent to the terminal device by the base station. It should be appreciated that the method for configuring codebooks set forth in this example is performed prior to channel measurement and channel feedback performed by a terminal device. That is, the bitmap is first received by the terminal device, and a selectable codeword range is determined, whereby an optimal codeword is selected from the determined available codeword range and fed back in a subsequent channel measurement and channel feedback procedure.

At operation S202, an optimal codeword is searched for by the terminal device based on the codebook configuration signaling.

Upon receiving the bitmap, and based on a mapping relationship between the bits in the bitmap and the codeword groups, the terminal device removes each codeword group corresponding to a bit with value of '0' in the bitmap sequence from the preset codebook, and searches for the optimal codeword from the codeword group corresponding to a bit with value of '1', for channel quantization and feedback.

It should be appreciated that, since the codewords in a codebook may be indicated by the indices of the codewords in a matrix, each bit in the bitmap may correspond to a respective one of the indices of each codeword group, i.e., a mapping is formed. Furthermore, other mappings may also be preset according to actual situations.

### Example Embodiment 3

According to this embodiment, another method for configuring codebooks applied to the base station and the terminal device is provided. The method includes operations S301 to S302. In this embodiment, at least two codeword overlapping regions are present in the codeword groups divided from the codebook, which means that shared codeword(s) is/are present.

At operation S301, a codebook configuration signaling is sent to a terminal device by a base station.

Codebook configuration is performed by the base station, and a codebook configuration signaling is generated and sent to the terminal device. The codebook configuration signaling is indicative of a selectable codeword range when channel feedback is being performed by the terminal device. As such, the search space of codewords is further compressed, and the feedback efficiency is improved. In the present example embodiment, the codebook configuration signaling includes a bitmap. The bitmap is in a sequence form, and one codeword group is specified by each bit in the bitmap sequence. It should be appreciated that codewords in a codebook may be arranged in a form of a two-dimensional matrix, a three-dimensional matrix, or even a higher-dimensional matrix, and a codeword within a specific region of the two-dimensional matrix, the three-dimensional matrix, or the higher-dimensional matrix may be specified by one bit at a specific position in the bitmap sequence.

In an implementation, the generation and transmission of the codebook configuration signaling by the base station includes operations S3011 to S3014.

At operation S3011, a preset codebook is selected by the base station.

It should be appreciated that at least one identical preset codebook designed in advance (i.e., a preset codebook) is shared by both the base station and the terminal device. The quantity of codewords in the preset codebook is determined based on preset parameters *N₁, N₂, O₁,* and *O₂*, and all codewords may be arranged in a matrix form by rows and columns.

Each codeword in the preset codebook may represent a complex matrix intended to configure an amplitude and a phase of a transmitted signal of each antenna on a MIMO array. Through control of the amplitude and the phase, signals transmitted by the MIMO array may achieve in-phase superposition in a designated direction, whereby a directional beam having a high gain is formed, and an effect of beamforming is achieved. Each codeword in the preset codebook is respectively configured to generate beams in different directions within a continuous region, whereby signal coverage of the continuous region may be realized by beams generated by all codewords in the codebook. Specifically, a codeword in the preset codebook may be in the following format: ${W}_{l , m , n} = \frac{1}{\sqrt{{P}_{CSI - RS}}} \left[\begin{matrix}{ν}_{l , m} \\ {φ}_{n} {ν}_{l , m}\end{matrix}\right]$ where, ${φ}_{n} = {e}^{jπn / 2}$ ${u}_{m} = \left\{\begin{matrix}\left[1 {e}^{j \frac{2 πm}{{O}_{2} {N}_{2}}} ⋯ {e}^{j \frac{2 πm \left({N}_{2}-1\right)}{{O}_{2} {N}_{2}}}\right] \\ 1\end{matrix}\right\} \begin{matrix}{N}_{2} > 1 \\ {N}_{2} = 1\end{matrix}$ ${ν}_{l , m} = \left[{u}_{m} {e}^{j \frac{2 πl}{{O}_{1} {N}_{1}}}{u}_{m} ⋯ {e}^{j \frac{2 πl \left({N}_{1}-1\right)}{{O}_{1} {N}_{1}}}{u}_{m}\right] .$

In the expression discussed above, {l, m, n} is codeword indices indicative of a position where a codeword is located in the codebook. In some cases, the index *l* and the index *m* may be indicative of a beam direction corresponding to the codeword. Specifically, the index *l* may be indicative of a first direction, such as a horizontal direction, and the index *m* may be indicative of a second direction, such as a vertical direction. In some cases, the index *n* may specify a polarization phase of the beam corresponding to the codeword. For example, the index n may take a value of 0, 1, 2, or 3, and polarization phase information of the beam may be calculated based on the equation discussed above.

For multi-layer transmission case, the codeword in the preset codebook may be in the following format: ${W}_{{l}_{11} {l}_{12} , ⋯ {l}_{TK} , {m}_{11} {m}_{12} , ⋯ {m}_{TK} , {n}_{21} {n}_{22} , ⋯ {n}_{TK}} = \frac{1}{\sqrt{{KP}_{CSI - RS}}} \left[\begin{matrix}{ν}_{{l}_{11} , {m}_{11}} & {ν}_{{l}_{12} , {m}_{12}} & ⋯ & {ν}_{{l}_{1 k} , {m}_{1 k}} \\ {φ}_{{n}_{21}} {ν}_{{l}_{21} , {m}_{21}} & {φ}_{{n}_{22}} {ν}_{{l}_{22} , {m}_{22}} & ⋯ & {φ}_{{n}_{2 k}} {ν}_{{l}_{2 k} , {m}_{2 k}} \\ ⋮ & ⋮ & ⋱ & ⋮ \\ {φ}_{{n}_{T 1}} {ν}_{{l}_{T 1} , {m}_{T 1}} & {φ}_{{n}_{T 2}} {ν}_{{l}_{T 2} , {m}_{T 2}} & ⋯ & {φ}_{{n}_{Tk}} {ν}_{{l}_{Tk} , {m}_{Tk}}\end{matrix}\right]$ where, ${φ}_{n} = {e}^{jπn / 2}$ ${ν}_{l , m} = \left[{u}_{m} {e}^{j \frac{2 πl}{{O}_{1} {N}_{1}}}{u}_{m} ⋯ {e}^{j \frac{2 πl \left({N}_{1}-1\right)}{{O}_{1} {N}_{1}}}{u}_{m}\right] .$

*T* is a quantity of sub-arrays (panels) divided from the MIMO array, *K* is a quantity of transmission layers, *P_{CSI-RS}* is a quantity of ports, and a column in the codeword discussed above represents a codeword vector configured for one-layer transmission. {l, m, n} is codeword indices indicative of a position where a codeword is located in the codebook. In addition, codeword positions may be indicated by codeword indications. Each of the codeword indications corresponds to a respective one of the indices of the codewords. In some cases, {i₁₁, i₁₂} in the codeword indication is determined by the index *l* and the index *m* of the codeword, and i2 is determined by a size of the codeword group indicated by {i₁₁, i₁₂} and a quantity of polarization states.

At operation S3012, the preset codebook is divided into codeword groups of different sizes by the base station, where at least two overlapping regions are present among the codeword groups.

An overlapping region present among the codeword groups indicates that a shared codeword is present among overlapping codeword groups. FIG. 8 is a block diagram illustrating codebook division with overlapping region according to another embodiment of the present disclosure.

In this example, the preset codebook is divided into 30 codeword groups. As shown in FIG. 8, each block in the figure represents one codeword group, and the size of a block indicates a quantity of codewords included in the codeword group. A codeword group represented by a smaller block includes four codewords, and a codeword group represented by a larger block includes 16 codewords. The horizontal axis and the vertical axis in the figure represent indices of codewords. In this example, a codeword group *i* and a codeword group *k* each includes 16 codewords. A partial overlapping region is present between the codeword group *i* and each of codeword groups *a, b,* c, and *d.* A partial overlapping region is present between the codeword group *k* and each of codeword groups *e, f, g,* and *h.*

At operation S3013, a selectable codeword group and a selectable codeword group are determined by the base station, and a bitmap is configured for indication.

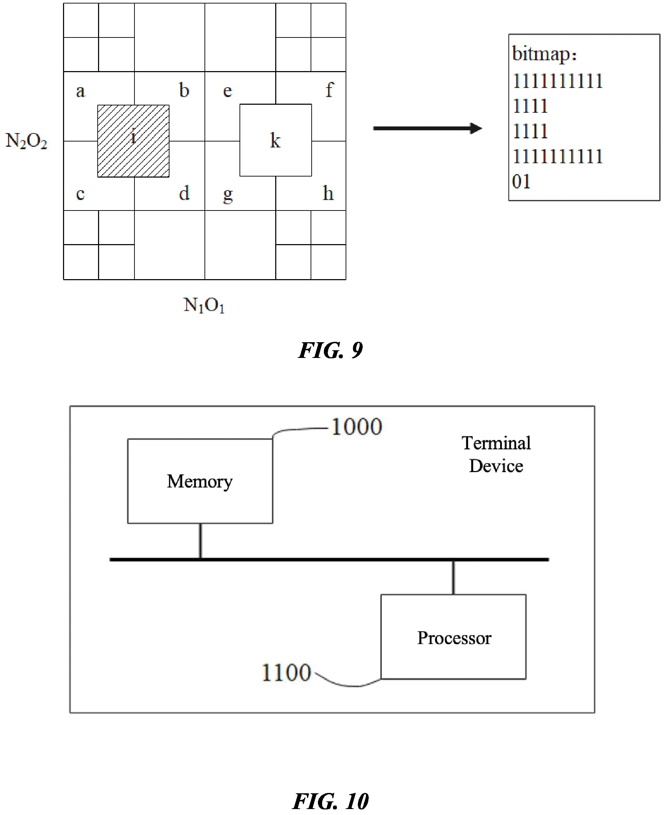

FIG. 9 is a block diagram illustrating the indication of a codeword group by a bitmap according to another embodiment of the present disclosure. As shown in FIG. 9, a codebook is shown on the left side with the blocks representing codeword groups of different sizes. The shaded blocks represent codeword groups unavailable for feedback (i.e., the codeword groups are not selectable), and remaining block regions represent codeword groups available for feedback (i.e., the codeword groups are selectable). On the right side is a bitmap configured by the base station according to the availabilities of the codeword groups, with each bit in the bitmap indicative a respective one of the codeword groups. For example, a bit with the value of '0' specifies that the codeword group as indicated is not selectable; a bit with the value of '1' specifies that the codeword group as indicated is selectable.

It should be noted that a base station may comprehensively consider a communication state of each terminal device to determine selectable and non-selectable codeword groups, and configures and delivers a bitmap subsequently to the respective terminal device. The terminal device selects a codeword from the selectable codeword groups specified by the bitmap. The position of each codeword group and the quantity of codewords contained are in a one-to-one correspondence with order of a bit sequence in the bitmap and are set in advance. As shown in FIG. 9 by way of example, a bitmap sequence [111111111111111111111111111101] includes 30 bits, respectively indicating 30 codeword groups with 29 available codeword groups and 1 unavailable codeword group. The last two bits of the bitmap sequence indicates the codeword groups *i* and *k* respectively. It should be appreciated that a correspondence relationship between bit positions and codeword groups is preset.

In this example, the codeword groups *i* and *k* each includes a bit indicating the availability of the respective codeword group. The bit of the codeword group *i* with the value of '0', indicates that 16 codewords included in the codeword group *i* are not selectable. Likewise, the bit of the codeword group *k* with the value of '1', indicates that 16 codewords included in the codeword group *k* are selectable. Regions respectively overlapped by the codeword group *i* and each of the codeword groups *a, b, c*, and *d* are jointly determined respectively by the codeword groups *i* and *a,* the codeword groups *i* and *b,* the codeword groups *i* and *c*, and the codeword groups *i* and *d.* Regions respectively overlapped by the codeword group *k* and each of the codeword groups *e, f, g,* and *h* are jointly determined respectively by the codeword groups *k* and *e*, the codeword groups *k* and *f,* the codeword groups *k* and *g*, and the codeword groups *k* and *h.*

Therefore, in this example, the codewords shared by the codeword group *i* and each of the codeword groups *a, b, c, and d* are all not selectable, and the codewords shared by the codeword group *k* and each of the codeword groups *e, f, g,* and *h* are all selectable.

If a design of overlapping codeword groups is not adopted, in order to indicate that codewords in corresponding regions of the codeword group *i* and the codeword group *k* are not selectable, sizes of the codeword groups *a, b, c*, and *d* and the codeword groups *e, f, g,* and *h* need to be reduced; the codeword groups *a, b, c*, and *d* and the codeword groups *e, f, g,* and *h* are all reduced from a codeword group including 16 codewords to a codeword group including 4 codewords, and accordingly a bitmap of 52 bits should be set. Conversely, employing an overlapping codeword design, only two codeword groups, i.e., the codeword group *i* and the codeword group *k,* along with a bitmap of 30 bits are additionally introduced, whereby the signaling overhead is significantly reduced, and configuration flexibility can be ensured.

At operation S3014, the bitmap is sent by the base station.

The configured bitmap is sent to the terminal device by the base station. It should be appreciated that the method for configuring codebooks set forth in this example is performed prior to channel measurement and channel feedback performed by a terminal device. That is, the bitmap is first received by the terminal device, and a selectable codeword range is determined, whereby an optimal codeword is selected from the determined selectable codeword range and fed back in a subsequent channel measurement and channel feedback procedure.

At operation S302, an optimal codeword is searched for by the terminal device based on the codebook configuration signaling.

Upon receiving the bitmap, and based on a mapping relationship between the bits in the bitmap and the codeword groups, the terminal device removes each codeword group corresponding to a bit with value of '0' in the bitmap sequence from the preset codebook, and searches for the optimal codeword from the codeword group corresponding to a bit with value of '1', for channel quantization and feedback.

It should be appreciated that, since the codewords in a codebook may be indicated by the indices of the codewords in a matrix, each bit in the bitmap may correspond to a respective one of the indices of each codeword group, i.e., a mapping is formed. Furthermore, other mappings may also be preset according to actual situations.

According to an embodiment, a terminal device is provided. The terminal device includes a memory 1000, a processor 1100 and a computer program stored in the memory 1000 and executable by the processor 1100 which, when executed by the processor 1100, causes the processor 1100 to carry out the method for configuring codebooks as described in any one of the embodiments above.

According to an embodiment of the present disclosure, a computer-readable storage medium is provided. The computer-readable storage medium stores a computer-executable instruction which, when executed by a processor causes the processor to carry out the method for configuring codebooks as described in any one of the embodiments above.

According to an embodiment of the present disclosure, a computer program product is provided. The computer program product stores a computer-executable instruction which, when executed by a processor causes the processor to carry out the method for configuring codebooks as described in any one of the embodiments above.

The system architecture and application scenarios described in an embodiment of the present disclosure are intended for better understanding of rather than limitations to the technical scheme of various embodiments of the present disclosure. It is known to those having ordinary skills in the art that, with the evolution of the system architecture and the emergence of new application scenarios, the technical scheme provided by the embodiment of the present disclosure is also applicable to similar technical problems.

It shall be appreciated by a person having ordinary skills in the art that all or some of the steps, functional modules/units in the methods, systems and devices disclosed above can be implemented as software, firmware, hardware and their appropriate combinations.

In the hardware implementation, the division between functional modules/ units mentioned in the above description does not necessarily correspond to the division of physical components. For example, a physical component may have multiple functions, or a function or step may be performed by several physical components in cooperation. Some or all physical components can be implemented as software executed by a processor, such as a central processing unit, a digital signal processor or a microprocessor, or as hardware, or as an integrated circuit, such as an application specific integrated circuit. Such software can be distributed on computer-readable media, which can include computer storage media (or non-transitory media) and communication media (or transitory media). As is well known to a person having ordinary skills in the art, the term computer storage medium includes volatile and nonvolatile, removable and non-removable medium implemented in any method or technology for storing information such as computer readable instructions, data structures, program modules or other data. Computer storage medium includes, but is not limited to, RAM, ROM, EEPROM, flash memory or other memory technologies, CD-ROM, digital versatile disks (DVD) or other optical disk storage, magnetic boxes, tapes, magnetic disk storage or other magnetic storage devices, or any other medium that can be configured to store desired information and accessible by a computer. Furthermore, it is well known to those having ordinary skills in the art that communication media usually contains computer-readable instructions, data structures, program modules or other data in modulated data signals such as carrier waves or other transmission mechanisms, and can include any information delivery media.

The terms "component", "module" and "system" used in this description are intended to refer to computer-related entities, hardware, firmware, a combination of hardware and software, software, or software in execution. For example, a component can be, but is not limited to, a process running by a processor, a processor, an object, an executable file, a thread of execution, a program, or a computer. By way of illustration, both an application running on a computing device and the computing device can be components. One or more components can reside in a process or thread of execution, and components can be located on one computer or distributed between two or more computers. In addition, these components can be executed from various computer-readable media having various data structures stored thereon. Components can communicate through local or remote processes, for example, according to signals with one or more data packets (for example, data from two components interacting with another component between a local system, a distributed system or a network, for example, the Internet interacting with other systems through signals).

Some embodiments of the embodiments of the present disclosure are illustrated above in conjunction with the drawings, and the present disclosure are not limited thereto. Any modifications, equivalents, alternations, or improvements, made within the scope of the present disclosure shall be included in the scope of the present disclosure.

## Claims

1. A method for designing a codebook, comprising:
presetting a codebook at least comprising two codewords;
dividing the at least two codewords into *N* groups, wherein *N* is greater than or equal to 2;
configuring at least one bitmap based on the codebook;
wherein the bitmap comprises at least a *B1* bit and a *B2* bit, the *B1* bit is indicative of a codeword group *C1* in the codebook, and the *B2* bit is indicative of a codeword group *C2* in the codebook;
and a quantity of codewords comprised in the codeword group *C1* is different from a quantity of codewords comprised in the codeword group *C2*.

2. The method according to claim 1, wherein the *B1* bit is further indicative of a state of the codeword group *C1* in the codebook, and the *B2* bit is further indicative of a state of the codeword group *C2* in the codebook.

3. The method according to claim 1 or 2, wherein the codeword group *C1* and the codeword group *C2* shares at least one identical codeword.

4. The method according to claim 3, wherein
the bitmap further comprises a *B3* bit and a *B4* bit, the *B3* bit is indicative of a codeword group *C3* in the codebook, and the *B4* bit is indicative of a codeword group *C4* in the codebook; and
the codeword group *C1* and the codeword group *C2* share *Q1* number of identical codewords, and the codeword group *C3* and the codeword group *C4* share *Q2* number of identical codewords, wherein Q1 is not equal to Q2.

5. A method for configuring a codebook, comprising:
transmitting a codebook configuration signaling;
wherein the configuration signaling comprises at least one bitmap;
the bitmap comprises at least a *B1* bit and a *B2* bit, the *B1* bit is indicative of a codeword group *C1* in the codebook, and the *B2* bit is indicative of a codeword group *C2* in the codebook; and
and a quantity of codewords comprised in the codeword group *C1* is different from a quantity of codewords comprised in the codeword group *C2*.

6. The method according to claim 5, wherein the *B1* bit is further indicative of a state of the codeword group *C1* in the codebook, and the *B2* bit is further indicative of a state of the codeword group *C2* in the codebook.

7. The method according to claim 5, wherein the codeword group *C1* and the codeword group *C2* comprise at least one shared codeword, wherein, each of the at least one shared codeword is an identical codeword among different codeword groups.

8. The method according to claim 7, wherein
the bitmap further comprises a *B3* bit and a *B4* bit, the *B3* bit is indicative of a codeword group *C3* in the codebook, and the *B4* bit is indicative of a codeword group *C4* in the codebook; and
the codeword group *C1* and the codeword group *C2* comprise *Q1* number of shared codewords, the codeword group *C3* and the codeword group *C4* comprise *Q2* number of shared codewords, wherein Q1 is not equal to Q2.

9. The method according to claim 7 or 8, comprising: jointly determining a state of the shared codeword according to a state of each codeword group corresponding to the shared codeword.

10. A method for configuring codebooks, comprising:
transmitting a codebook configuration signaling;
wherein the configuration signaling comprises at least one bitmap;
the bitmap comprises bit position information and bit value information;
the bit position information is indicative of different codeword groups in the codebook;
the bit value information is indicative of a state of the codeword groups;
and the codebook at least comprises two codeword groups comprising different quantities of codewords.

11. The method according to claim 10, wherein
at least one shared codeword is shared by the two codeword groups comprising different numbers of codewords, wherein, each of the at least one shared codeword is an identical codeword among different codeword groups.

12. The method according to claim 11, wherein
the codebook at least comprises two codeword groups comprising different quantities of shared codewords.

13. The method of claim 12, comprising:
jointly determining a state of each of the shared codewords according to a state of each codeword group corresponding to the respective one of the shared codewords.

14. A terminal device, comprising:
at least one processor;
at least one memory configured to store a program which, when executed by the at least one processor, causes the at least one processor to carry out the method as claimed in any one of claims 1 to 13.

15. A computer readable storage medium storing a computer program which, when executed by a processor, causes the processor to carry out the method as claimed in any one of claims 1 to 13.

16. A computer program product, comprising a computer program or a computer instruction stored in a computer-readable storage medium which, when executed by a processor of a computer device, causes the computer device to carry out the method according to any one of claims 1 to 13.
